# EUROPEAN PATENT APPLICATION

(11) **EP 2 827 568 A1**
(43) Date of publication of application: **21.01.2015**
(21) Application number: 14176644.4
(22) Date of filing: 11.07.2014
(51) Int. Cl.: H04M 1/64, H04M 1/725

(54) **Electric apparatus and call control method**

(30) Priority: 18.07.2013 CN 201310303437; 06.02.2014 US 201414174062
(71) Applicant: Sony Corporation, Tokyo 108-0075 (JP)
(72) Inventor: Yang, Shuangxin, 100102 Beijing (CN); Chen, Xuefei, 100102 Beijing (CN)
(74) Representative: Zacco Sweden AB

(57) **Abstract**

Embodiments of the present invention provide an electronic apparatus and call control method. Wherein, the electronic apparatus comprises: a display unit configured to display a direct hangup virtual key and a soft hangup virtual key when the electronic apparatus is in a call; and a communication unit configured to play a predefined prompt voice to the other party of the electronic apparatus when the soft hangup virtual key is operated. With the electronic apparatus and call control method of the embodiments of the present invention, impoliteness due to sudden hangup in emergencies may be avoided, thereby improving user experiences.

## Description

### Technical Field

The present invention relates to the field of communications, and in particular to an electronic apparatus and call control method.

### Background

Currently, in a process for call by using such electronic apparatuses as mobile communication terminal, a method for terminating a call that is usually used is to hang up directly. However, in some emergent cases, it needs to hang up at once and there is no time to inform the other party. At this moment, a user has no time to explain to the other party and hang up directly. However, hanging up without the other party's knowledge is usually deemed as being impolite. And hanging up in emergencies influences the degree of communication between the two parties, thereby lowering the user experiences.

### Summary

Embodiments of the present invention provide an electronic apparatus and call control method, so as to solve a problem of misunderstanding by the other party due to sudden hangup in emergencies.

According to a first aspect of the embodiments of the present invention, there is provided an electronic apparatus, comprising:
a display unit configured to display a direct hangup virtual key and a soft hangup virtual key when the electronic apparatus is in a call; and
a communication unit configured to play a predefined prompt voice to the other party of the electronic apparatus when the soft hangup virtual key is operated.

According to a second aspect of the embodiments of the present invention, there is provided an electronic apparatus as described in the first aspect, wherein the display unit displays a play progress of the prompt voice and a call recovery virtual key when the communication unit plays the prompt voice; and the communication unit disconnects the network of the call after the play of the prompt voice is terminated, or terminates the play of the prompt voice when the call recovery virtual key is operated.

According to a third aspect of the embodiments of the present invention, there is provided a call control method, comprising:
displaying a direct hangup virtual key and a soft hangup virtual key when an electronic apparatus is in a call with the other party; and
playing a predefined prompt voice to the other party of the electronic apparatus when the soft hangup virtual key is operated.

According to a fourth aspect of the embodiments of the present invention, there is provided a method as described in the third aspect, wherein a play progress of the prompt voice and a call recovery virtual key are displayed when the prompt voice is played, and the network of the call is disconnected after the play of the prompt voice is terminated, or the play of the prompt voice is terminated when the call recovery virtual key is operated.

The advantages of the embodiments of the present invention exist in: a direct hangup virtual key and a soft hangup virtual key are available for selection by users, and a prompt voice is played to the other party of the call after a user operates the soft hangup virtual key, thereby avoiding the problem of misunderstanding by the other party due to sudden hangup in emergencies, and improving the user experiences. And the user may be assisted in recovering a call by displaying a play progress of the prompt voice and a call recovery virtual key in the process of playing the prompt voice, thereby further improving the user experiences.

With reference to the following description and drawings, the particular embodiments of the present invention are disclosed in detail, and the principle of the present invention and the manners of use are indicated. It should be understood that the scope of the embodiments of the present invention is not limited thereto. The embodiments of the present invention contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

Many aspects of the present invention can be better understood with reference to the following drawings. The components in the drawings are not necessarily to scale, emphasis instead being placed upon clearly illustrating the principles of the present invention. To facilitate illustrating and describing some parts of the invention, corresponding portions of the drawings may be enlarged or reduced. Elements and features depicted in one drawing or embodiment of the invention may be combined with elements and features depicted in one or more additional drawings or embodiments. Moreover, in the drawings, like reference numerals designate corresponding parts throughout the several views and may be used to designate like or similar parts in more than one embodiment.

In the drawings:
Figure 1 is a schematic diagram of the structure of the electronic apparatus of Embodiment 1 of the present invention;
Figure 2 is a flowchart of the call control method of Embodiment 2 of the present invention; and
Figure 3 is an overall flowchart of the call control method of Embodiment 2 of the present invention.

### Detailed Description of the Embodiments

The interchangeable terms "electronic apparatus" and "electronic device" include portable radio communication apparatus. The term "portable radio communication apparatus", which hereinafter is referred to as a "mobile terminal", "portable electronic device", or "portable communication device", comprises all apparatuses such as mobile telephones, pagers, communicators, electronic organizers, personal digital assistants (PDAs), smartphones, portable communication devices or the like.

In the present application, embodiments of the invention are described primarily in the context of a portable electronic device in the form of a mobile telephone (also referred to as "mobile phone"). However, it shall be appreciated that the invention is not limited to the context of a mobile telephone and may relate to any type of appropriate electronic apparatus having the function of photographing and sound recording.

The preferred embodiments of the present invention are described as follows with reference to the drawings.

### Embodiment 1

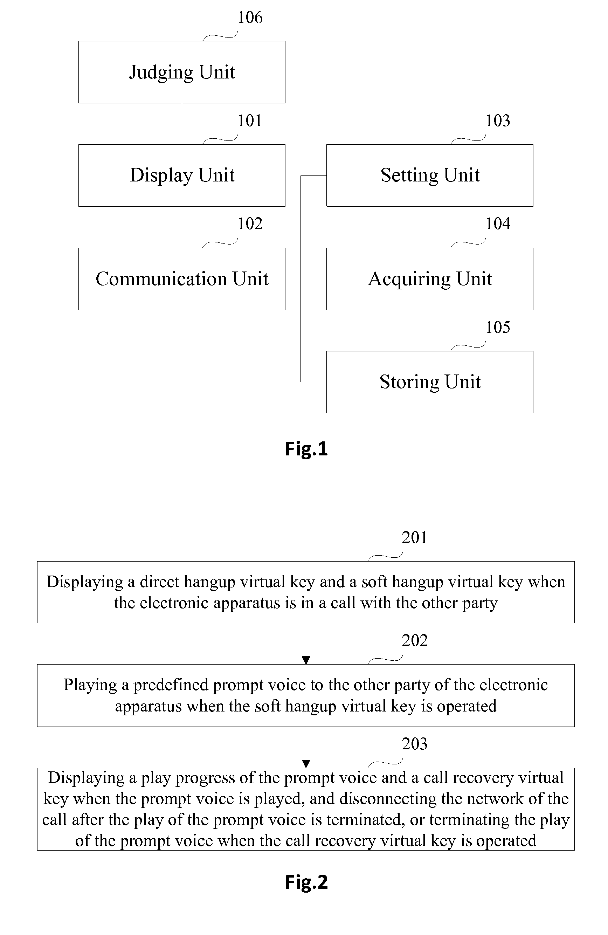

An embodiment of the present invention provides an electronic apparatus. Figure 1 is a schematic diagram of the composition of the electronic apparatus. As shown in Fig. 1, besides the original compositions and functions, the electronic apparatus 100 further comprises a display unit 101 and a communication unit 102. Besides the original compositions and functions, the display unit 101 and the communication unit 102 further possess the functions of the embodiment of the present invention as described below. Wherein,
the display unit 101 display a direct hangup virtual key and a soft hangup virtual key when the electronic apparatus is in a call with the other party.

Wherein, the display unit 101 may be realized by a touch screen, and the direct hangup virtual key and the soft hangup virtual key may be displayed on the display unit 101, for example, in a manner of a seek bar. For example, the interface of the display unit 101 in a call is as that of an incoming call and has two seek bars, wherein a soft hangup is initiated when the left seek bar is dragged rightwards, and a call is directly hung up when the right seek bar is dragged leftwards. The above manners of implementation of the seek bar are illustrative only, and the embodiments of the present invention are not limited thereto. The direct hangup virtual key and the soft hangup virtual key may also be displayed respectively on the display unit 101 in a manner of virtual buttons, and their corresponding functions (the direct hangup or soft hangup) may be activated by clicking the virtual buttons.

Wherein, the other party in a call may be one party, and may also be multiple parties, and the present invention is not limited thereto.

The communication unit 102 plays a predefined prompt voice to the other party of the electronic apparatus when the soft hangup virtual key is operated.

Wherein, when the soft hangup virtual key is pressed or touched by a user, the press or touch signal is transmitted to a control part of the electronic apparatus, such as the CPU of the electronic apparatus, and the control part of the electronic apparatus immediately controls the communication unit 102 to play a predefined prompt voice to the other party of the electronic apparatus.

Wherein, when the direct hangup virtual key is pressed or touched by a user, the press or touch signal is likewise transmitted to the control part of the electronic apparatus, and the control part of the electronic apparatus immediately controls the communication unit 102 to disconnect the network of the call, thereby terminating the call with the other party.

Wherein, the predefined prompt voice may be one or more pre-recorded voices, and may also be a voice converted from a pre-compiled text, and this embodiment is not limited thereto. A pre-recorded voice may be "hello, somebody is temporarily busy and is unable to answer the call at present, and will contact you soon", etc. Wherein, the pre-recorded voice may be a voice intended in advance to be recorded, and may also be a content recorded during a call. Furthermore, in recording multiple voices in advance, one of them may be selected as said predefined prompt voice, for being played when needed.

With the electronic apparatus of this embodiment, two manners of hangup of direct hangup virtual key and soft hangup virtual key are available for a user to select, and a prompt voice is played to the other party when the user operates the soft hangup virtual key, thereby avoiding the problem of misunderstanding by the other party due to sudden hangup, and improving user's experiences.

In a mode of implementation of this embodiment, the display unit 101 may display a play progress of the prompt voice and a call recovery virtual key while the communication unit 102 plays the prompt voice, so that the user may recover the communication with the other party when an emergency passes and the network connection is not interrupted, thereby avoiding a troublesome case where the prompt voice has to be waited for being completely played and the number of the other party has to be dialed again, so as to make a call with the other party. Furthermore, in this embodiment, the communication unit 102 may disconnect the network of the call after the prompt voice is played, and terminates the play of the prompt voice when the call recovery virtual key is operated, so as to recover a normal call. Wherein, if the call recovery virtual key is not operated during the play of the prompt voice, it shows that the emergency has not passed, and the network of the call is disconnected after the prompt voice is played, so as to terminate the call of this time; and if the call recovery virtual key is operated during the play of the prompt voice, it shows that the emergency has passed, and the play of the prompt voice is terminated at this moment, so as to recover the normal call.

Wherein, the progress of the play of the prompt voice may be realized in a manner of progress bar, and the call recovery virtual key is realized in a manner same as that of the above-described direct hangup virtual key and the soft hangup virtual key, which may be realized by, for example, in a manner of seek bar, or a button, and shall not be described herein any further.

With the electronic apparatus of this embodiment, the progress of the play of the prompt voice and the call recovery virtual key are displayed in the process of playing the prompt voice, and the user is assisted in call recovery, thereby further improving the user experiences.

In a mode of implementation of this embodiment, the electronic apparatus further comprises a setting unit 103, as shown in Fig. 1, wherein,
the setting unit 103 is configured to set a response prompt according to information on the contact person of the other party of the call after the network of the call is disconnected.

Wherein, the information on the contact person of the other party of the call may a group of the other party of the call in a directory of the electronic apparatus, and the setting unit 103 may set the response prompt according to the group of the other party of the call in the directory of the electronic apparatus. For example, if the group of the other party A of the call in the directory of the electronic apparatus is VIP user group, a prompting frame will be popped out within a relatively short period of time, such as 30 minutes, prompting the user to contact the party A, after the setting unit 103 sets the response prompt according thereto; for another example, if the group of the other party B of the call in the directory of the electronic apparatus is family member group, a prompting frame will be popped out after an appropriate period of time, such as 2 hours, prompting the user to contact the party B, after the setting unit 103 sets the response prompt according thereto.

With the setting unit 103, the user may be prompted to contact the other party of the call, thereby further improving user's experiences. And the prompt may be performed more smartly according to the time of prompt set in the directory.

In a mode of implementation of this embodiment, the electronic apparatus further comprises an acquiring unit 104, as shown in Fig. 1, wherein,
the acquiring unit 104 is configured to acquire an idle time period according to a timing schedule after the network of the call is disconnected, and send the idle time period to the other party of the call via the communication unit 102. Wherein, the timing schedule may be in the electronic apparatus, and may also be acquired from, for example, other devices of a computer, via the network.

Wherein, as the increasing popularization of electronic apparatuses and variety of their functions, many electronic apparatuses have a function of timing schedule, and a user may arrange activities according to the timing schedule. According to the timing schedule, which time periods of the user in a predefined time (such as the same day, in three days, or in a week) are idle may be determined, and after information on the idle time period is acquired, it may be sent to the other party of the call. In this embodiment, the manner of sending an idle time period is not limited. For example, it may be sent in a manner of short message, or in a manner of a voice message. Furthermore, a content of the short message is not limited in this embodiment. For example, the content may be "hello, somebody will be free sometime, when you can contact", etc.

With the acquiring unit 104, the idle time period of the user may be informed to the other party of the call, so that the other party of the call may contact the user according thereto, thereby avoiding the problem of no answering or sudden hangup when a call is made at an improper time, thereby further improving user experiences.

In a mode of implementation of this embodiment, the electronic apparatus further comprises a storing unit 105, as shown in Fig. 1, wherein,
the storing unit 105 is configured to store a pre-recorded prompt voice or a pre-compiled text, so that the communication unit 102 sends the pre-recorded prompt voice as a preset prompt voice to the other party of the call, or converts the pre-compiled text into a voice and then sends as a preset prompt voice to the other party of the call.

Wherein, as described above, the storing unit 105 may also pre-store one or more pre-recorded voices. If a pre-recorded voice is stored, once the soft hangup virtual key is activated, this pre-recorded voice is played, and the network of the call is disconnected after the play of the voice. And if multiple pre-recorded voices are stored, one of them may be set as the prompt voice. For example, the user may select from the multiple voices and set one of them as the prompt voice; and may also select from the multiple voices after the soft hangup indication is activated, and set one of them as the prompt voice, play the set pre-recorded prompt voice when the soft hangup virtual key is activated, and disconnects the network of the call after the play of the voice.

Wherein, as described above, the storing unit 105 may also pre-stores one or more pre-compiled texts. Different from pre-storing one or more voices, when the soft hangup virtual key is activated, the selected text is converted into a prompt voice and then played, and the network of the call is disconnected after the play of the voice.

With the storing unit 105, basis and guarantee are offered for customization of prompt voice of a user, thereby improving user's experiences.

In a mode of implementation of this embodiment, the electronic apparatus further comprises a judging unit 106, wherein,
the judging unit 106 is configured to judge whether the electronic apparatus allocates a prompt voice.

Wherein, the display unit 101 displays the direct hangup virtual key if the result of judgment of the judging unit 106 is that a prompt voice is not allocated, and displays the direct hangup virtual key and the soft hangup virtual key if the result of judgment of the judging unit 106 is that a prompt voice is allocated. Wherein, a prompt voice being allocated refers to that the function of a prompt voice is activated.

With the judging unit 106, the interface display of hangup may be performed according to whether a prompt voice is allocated, thereby further improving user experiences.

It can be seen from the above embodiment that a direct hangup virtual key and a soft hangup virtual key are available for selection by users, and a prompt voice is played to the other party of the call after a user operates the soft hangup virtual key, thereby avoiding the problem of misunderstanding by the other party due to sudden hangup in emergencies, and improving the user experiences. And the user may be assisted in recovering a call by displaying a play progress of the prompt voice and a call recovery virtual key in the process of playing the prompt voice, thereby further improving the user experiences.

An embodiment of the present invention further provides a call control method, as described in Embodiment 2 below. As the principle of the method in solving problems is similar to the functions of the components of the electronic apparatus of Embodiment 1, the implementation of the electronic apparatus of Embodiment 1 may be referred to for the implementation of the method, and the repeated parts shall not be described any further.

### Embodiment 2

An embodiment of the present invention further provides a call control method, applicable to an electronic apparatus. Fig. 2 is a flowchart of the method. As shown in Fig. 2, the method comprises:
step 201: displaying a direct hangup virtual key and a soft hangup virtual key when the electronic apparatus is in a call with the other party;
step 202: playing a predefined prompt voice to the other party of the electronic apparatus when the soft hangup virtual key is operated;
   wherein, the predefined prompt voice may be a pre-recorded prompt voice, or a voice converted from a pre-compiled text;
step 203: displaying a play progress of the prompt voice and a call recovery virtual key when the prompt voice is played, and disconnecting the network of the call after the play of the prompt voice is terminated, or terminating the play of the prompt voice when the call recovery virtual key is operated.

In a mode of implementation of this embodiment, a response prompt may be set according to information on the contact person of the other party of the call after the network of the call is disconnected.

In a mode of implementation of this embodiment, an idle time period may be acquired according to a timing schedule after the network of the call is disconnected, and the idle time period is sent to the other party of the call.

In a mode of implementation of this embodiment, before displaying a direct hangup virtual key and a soft hangup virtual key in step 201, whether the electronic apparatus allocates a prompt voice may be judged first, and the direct hangup virtual key is displayed if no prompt voice is allocated, and the direct hangup virtual key and the soft hangup virtual key are displayed if a prompt voice is allocated.

For clarity and easy understanding of the method of this embodiment, the method shall be described in detail below with reference to an overall operational flowchart

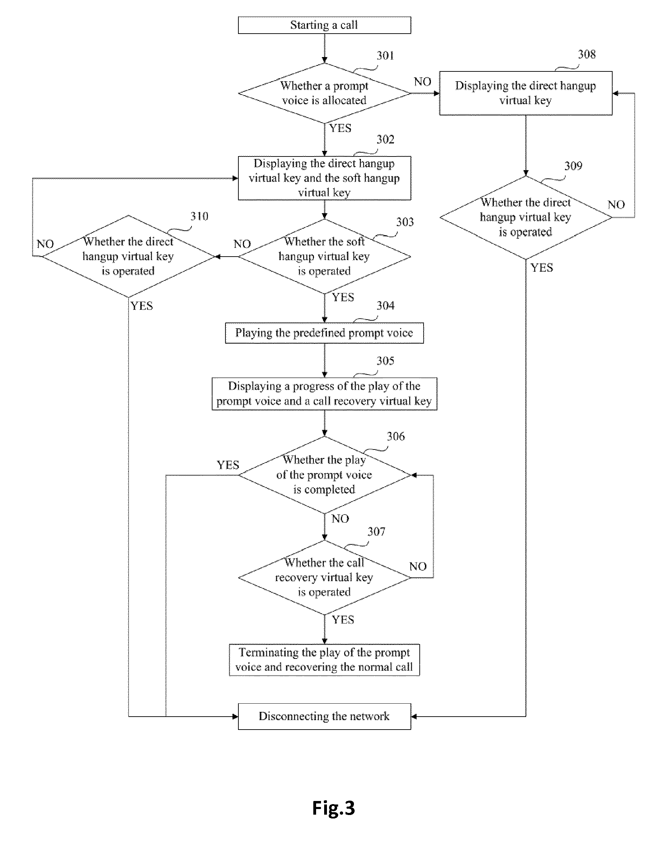

Fig. 3 is an overall operational flowchart of the call control method of this embodiment. As shown in Fig. 3, the method comprises:
step 301: judging whether the electronic apparatus allocates a prompt voice after the electronic apparatus starts a call, and if yes, executing step 302; otherwise, executing step 308; wherein, a prompt voice being allocated refers to that the function of a prompt voice is activated;
step 302: displaying the direct hangup virtual key and the soft hangup virtual key;
step 303: judging whether the soft hangup virtual key is operated, and if yes, executing step 304; otherwise, executing step 310;
step 304: playing the predefined prompt voice to the other party of the call of the electronic apparatus;
   wherein, the predefined prompt voice may be a pre-recorded prompt voice, or a voice converted from a pre-compiled text;
step 305: displaying a progress of the play of the prompt voice and a call recovery virtual key;
step 306: judging whether the play of the prompt voice is completed, and if yes, disconnecting the network of the call; otherwise, executing step 307;
   wherein, after the network of the call is disconnected, a response prompt may be set according to information on a contact person of the other party of the call;
   wherein, after the network of the call is disconnected, an idle time period may be acquired according to a timing schedule, and the idle time period is sent to the other party of the call;
step 307: judging whether the call recovery virtual key is operated, and if yes, terminating the play of the prompt voice and recovering the normal call; otherwise, turning back to step 306;
step 308: displaying the direct hangup virtual key;
step 309: judging whether the direct hangup virtual key is operated, and if yes, disconnecting the network of the call; otherwise, turning back to step 308; and
step 310: judging whether the direct hangup virtual key is operated, and if yes, disconnecting the network of the call; otherwise, turning back to step 302.

In the above embodiment, the steps are carried out in an order of judging whether the soft hangup virtual key is operated (step 303) first, and then judging whether the direct hangup virtual key is operated (step 310); however, this embodiment is note limited thereto. In other embodiments, whether the direct hangup virtual key is operated is judged (step 310) first, and then whether the soft hangup virtual key is operated is judged (step 303). The procedures after the judgment are the same as those shown in Fig. 3, and shall not be described herein any further.

With the method of this embodiment, a direct hangup virtual key and a soft hangup virtual key are available for selection by users, and a prompt voice is played to the other party of the call after a user operates the soft hangup virtual key, thereby avoiding the problem of misunderstanding by the other party due to sudden hangup in emergencies, and improving the user experiences. And the user may be assisted in recovering a call by displaying a play progress of the prompt voice and a call recovery virtual key in the process of playing the prompt voice, thereby further improving the user experiences.

The above apparatuses and methods of the present invention may be implemented by hardware, or by hardware in combination with software. The present invention relates to such a computer-readable program that when the program is executed by a logic device, the logic device is enabled to carry out the apparatus or components as described above, or to carry out the methods or steps as described above.

The present invention also relates to a storage medium for storing the above program, such as a hard disk, a floppy disk, a CD, a DVD, and a flash memory, etc.

The present invention is described above with reference to particular embodiments. However, it should be understood by those skilled in the art that such a description is illustrative only, and not intended to limit the protection scope of the present invention. Various variants and modifications may be made by those skilled in the art according to the spirits and principle of the present invention, and such variants and modifications fall within the scope of the present invention.

## Claims

1. An electronic apparatus, comprising:
a display unit configured to display a direct hangup virtual key and a soft hangup virtual key when the electronic apparatus is in a call; and
a communication unit configured to play a predefined prompt voice to the other party of the electronic apparatus when the soft hangup virtual key is operated.

2. The electronic apparatus according to claim 1, wherein the display unit displays a play progress of the prompt voice and a call recovery virtual key when the communication unit plays the prompt voice; and the communication unit disconnects the call after the play of the prompt voice is terminated, or terminates the play of the prompt voice when the call recovery virtual key is operated.

3. The electronic apparatus according to any one of the preceding claims, wherein the electronic apparatus further comprises a setting unit configured to set a response prompt according to information on the contact person of the other party of the call after the call is disconnected.

4. The electronic apparatus according to any one of the preceding claims, wherein the electronic apparatus further comprises an acquiring unit configured to acquire an idle time period according to a timing schedule after the call is disconnected, and send the idle time period to the other party of the call via the communication unit.

5. The electronic apparatus according to any one of the preceding claims, wherein the electronic apparatus further comprises_ a storing unit configured to store a pre-recorded prompt voice or a pre-compiled text, so that the communication unit sends the pre-recorded prompt voice as a preset prompt voice to the other party of the call, or converts the pre-compiled text into a voice and then sends as a preset prompt voice to the other party of the call.

6. The electronic apparatus according to any one of the preceding claims, wherein the electronic apparatus further comprises a judging unit configured to judge whether the electronic apparatus allocates a prompt voice,
wherein the display unit displays the direct hangup virtual key if the result of judgment of the judging unit is that a prompt voice is not allocated, and
wherein the display unit displays the direct hangup virtual key and the soft hangup virtual key if the result of judgment of the judging unit is that a prompt voice is allocated.

7. A call control method, applicable to an electronic apparatus, the method comprising:
displaying a direct hangup virtual key and a soft hangup virtual key when an electronic apparatus is in a call with the other party; and
playing a predefined prompt voice to the other party of the electronic apparatus when the soft hangup virtual key is operated.

8. The method according to claim 7, wherein the method further comprises displaying a play progress of the prompt voice and a call recovery virtual key when the prompt voice is played, and disconnecting the call after the play of the prompt voice is terminated, or terminating the play of the prompt voice when the call recovery virtual key is operated.

9. The method according to any one of claims 7-8, further comprising setting a response prompt according to information on a contact person of the other party of the call after the call is disconnected.

10. The method according to any one of claims 7-9, further comprising acquiring an idle time period according to a timing schedule of the electronic apparatus after the call is disconnected, and sending the idle time period to the other party of the call.

11. The method according to any one of claims 7-10, wherein the predefined prompt voice is a pre-recorded prompt voice, or a voice converted from a pre-compiled text.

12. The method according to any one of claims 7-11, further comprising:
judging whether the electronic apparatus allocates a prompt voice;
displaying the direct hangup virtual key if no prompt voice is allocated; and
displaying the direct hangup virtual key and the soft hangup virtual key if a prompt voice is allocated.
